# EUROPEAN PATENT APPLICATION

(11) **EP 4 769 505 A1**
(43) Date of publication of application: **01.07.2026**
(21) Application number: 24861864.7
(22) Date of filing: 27.08.2024
(51) Int. Cl.: H01M 4/13, H01M 4/70, H01M 10/058, B60L 50/60

(54) **ELECTRODE SHEET, BATTERY CELL, BATTERY, ELECTRICAL DEVICE AND MANUFACTURING METHOD FOR ELECTRODE SHEET**

(30) Priority: 08.09.2023 CN 202311163615
(71) Applicant: Contemporary Amperex Technology Co., Limited, Ningde, Fujian 352100 (CN)
(72) Inventor: WU, Kai, Ningde, Fujian 352100 (CN); CHEN, Jiahua, Ningde, Fujian 352100 (CN); YE, Yonghuang, Ningde, Fujian 352100 (CN); OUYANG, Shaocong, Ningde, Fujian 352100 (CN); LI, Quanguo, Ningde, Fujian 352100 (CN); XU, Xiaofu, Ningde, Fujian 352100 (CN)
(74) Representative: Lorenz Seidler Gossel Part. mbB
(86) International application number: PCT/CN2024/114669
(87) International publication number: WO 2025/051020

(57) **Abstract**

An electrode sheet, a battery cell, a battery, an electrical device and a manufacturing method for the electrode sheet, which can improve the yield of battery cells. The electrode sheet comprises: a first current collector, a first conductive layer and a first layer; the first current collector comprises a first body and a tab area connected to the edge of the first body; the first body comprises a coating area and an edge area, the first conductive layer being arranged on the surface of the coating area, the first layer being arranged on the surface of the edge area, and the porosity of the first layer being less than that of the first conductive layer.

## Description

### CROSS-REFERENCE TO RELATED APPLICATIONS

This application claims priority to the Chinese Patent Application No. 202311163615.1, filed on September 8, 2023 and entitled "ELECTRODE SHEET, BATTERY CELL, BATTERY, ELECTRIC DEVICE, AND METHOD FOR PREPARING ELECTRODE SHEET", which is incorporated herein by reference in its entirety.

### TECHNICAL FIELD

Embodiments of this application relate to the field of battery technology, and in particular, to an electrode sheet, a battery cell, a battery, an electric device, and a method for preparing an electrode sheet.

### BACKGROUND

With the increasing aggravation of environmental pollution, the new energy industry has received increasing attention. In the new energy industry, battery technology is an important factor related to its development.

The development of battery technology needs to consider multiple design factors, such as the energy density, the cycle life, and the yield. The design of an electrode sheet in a battery cell is crucial to the yield and service performance of the battery cell. Therefore, how to provide an electrode sheet to improve the yield of the battery cell has become an urgent technical problem to be solved in the art.

### SUMMARY

Embodiments of this application provide an electrode sheet, a battery cell, a battery, an electric device, and a method for preparing an electrode sheet, which can improve the yield of the battery cell.

According to a first aspect, an electrode sheet is provided, including: a first current collector, where the first current collector includes a first body and a tab region connected to an edge of the first body, and the first body includes a coating region and an edge region; a first conductive layer, the first conductive layer being provided on a surface of the coating region; and a first layer, the first layer being provided on a surface of the edge region; where a porosity of the first layer is less than a porosity of the first conductive layer.

In the embodiments of this application, the first current collector includes the first body, the first conductive layer is provided on the surface of the coating region of the first body, the first layer is provided in the edge region of the first body, and the porosity of the first layer is less than the porosity of the first conductive layer, that is, a density of the first layer is higher than a density of the first conductive layer. This can increase the density of the first layer to alleviate the coating fall-off problem of a to-be-cut electrode sheet during the cutting process of the edge region, thereby reducing the risk of internal short circuit of the battery cell caused by overlapping of the positive electrode sheet and the negative electrode sheet, and improving the yield of the battery cell.

In some implementations, the porosity A₁ of the first layer satisfies: 0% < A₁ ≤ 50%. In this way, in the embodiments of this application, the porosity of the first layer is less than the porosity of the first conductive layer, and the porosity A₁ of the first layer is set to satisfy 0% < A₁ ≤ 50%. This can increase the density of the first layer to effectively alleviate the coating fall-off problem of the to-be-cut electrode sheet during the cutting process of the edge region, thereby reducing the risk of internal short circuit of the battery cell caused by overlapping of the positive electrode sheet and the negative electrode sheet, and improving the yield of the battery cell.

In some implementations, the porosity A₁ of the first layer satisfies: 20% ≤ A₁ ≤ 30%. In this way, in the embodiments of this application, the porosity of the first layer is less than the porosity of the first conductive layer, and the porosity A₁ of the first layer is set to satisfy 20% ≤ A₁ ≤ 30%. This can increase the density of the first layer to further alleviate the coating fall-off problem of the to-be-cut electrode sheet during the cutting process of the edge region, thereby reducing the risk of internal short circuit of the battery cell caused by overlapping of the positive electrode sheet and the negative electrode sheet, and improving the yield of the battery cell.

In some implementations, a ratio L₁/D₁ of a dimension L₁ of the edge region in a first direction to a thickness D₁ of the first conductive layer satisfies: 10 ≤ L₁/D₁ ≤ 1000, preferably 20 ≤ L₁/D₁ ≤ 100, where the first direction is perpendicular to a thickness direction of the electrode sheet. In this way, in the embodiments of this application, the ratio L₁/D₁ of the dimension L₁ of the edge region in the first direction to the thickness D₁ of the first conductive layer is set to satisfy 10 ≤ L₁/D₁ ≤ 1000; and preferably, the value of L₁/D₁ can also be set to satisfy 20 ≤ L₁/D₁ ≤ 100. This can reduce the thermal influence on the first conductive layer during the laser die-cutting process, alleviating the coating fall-off problem caused by thermal expansion of the first conductive layer during the cutting process of the electrode sheet, thereby improving the manufacturing performance of the battery.

In some implementations, the dimension L₁ of the edge region in the first direction satisfies: 2 mm ≤ L₁ ≤ 20 mm. In this way, in the embodiments of this application, the dimension L₁ of the edge region in the first direction is set to satisfy 2 mm ≤ L₁ ≤ 20 mm, so that a dimension of the coating region in the first direction is adjusted by adjusting the dimension L₁ of the edge region in the first direction, thereby improving the conductive performance of the first conductive layer and increasing the energy density of the battery.

In some implementations, the dimension L₁ of the edge region in the first direction satisfies: 3 mm ≤ L₁ ≤ 6 mm. In this way, in the embodiments of this application, the dimension L₁ of the edge region in the first direction is set to satisfy 3 mm ≤ L₁ ≤ 6 mm, so that the dimension of the coating region in the first direction can be adjusted by adjusting the dimension L₁ of the edge region in the first direction, thereby further improving the conductive performance of the first conductive layer and increasing the energy density of the battery.

In some implementations, the thickness D₁ of the first conductive layer satisfies: 1 µm ≤ D₁ ≤ 50 µm. In this way, in the embodiments of this application, the thickness D₁ of the first conductive layer is set to satisfy 1 µm ≤ D₁ ≤ 50 µm, so that the conductive performance of the first conductive layer can be improved by controlling the thickness D₁ of the first conductive layer, thereby increasing the energy density of the battery.

In some implementations, a material of the first conductive layer includes at least one of the following materials: carbon nanotubes, graphene, conductive graphite, and conductive carbon. In this way, in the embodiments of this application, the material of the first conductive layer is set to include at least one of the following materials: carbon nanotubes, graphene, conductive graphite, and conductive carbon, so that the conductive performance of the electrode sheet can be improved, thereby increasing the energy density of the battery.

In some implementations, the first layer extends to the tab region. In this way, in the embodiments of this application, the first layer extends to the tab region, that is, the first layer may be provided on at least part of a surface of the tab region, so that the tab region can be reinforced, thereby reducing deformation and cracking of the electrode sheet during the cutting process and subsequent winding process, improving the service performance of the battery, facilitating the processing and manufacturing of the electrode sheet, and improving the manufacturing performance of the battery.

In some implementations, the first layer further extends to a surface of the first conductive layer away from the first current collector. In this way, in the embodiments of this application, the first layer extends to the coating region, thereby facilitating the processing and manufacturing of the electrode sheet, and improving the manufacturing performance of the battery.

In some implementations, the first layer includes a second conductive layer. In this way, in the embodiments of this application, providing the second conductive layer on the surface of the edge region can increase a deposition area of metal ions on the electrode sheet and improve the conductive performance of the electrode sheet, thereby increasing the energy density of the battery.

In some implementations, a material of the second conductive layer includes at least one of the following materials: carbon nanotubes, graphene, and conductive graphite.

In the embodiments of this application, the material of the second conductive layer is set to include at least one of the following materials: carbon nanotubes, graphene, and conductive graphite, so that the conductive performance of the electrode sheet can be significantly improved, thereby increasing the energy density of the battery.

In some implementations, a thickness D₂ of the second conductive layer satisfies: 2 µm ≤ D₂ ≤ 150 µm, preferably 70 µm ≤ D₂ ≤ 120 µm. In the embodiments of this application, the thickness D₂ of the second conductive layer is set to satisfy 2 µm ≤ D₂ ≤ 150 µm, and preferably, the thickness D₂ of the second conductive layer can also be set to satisfy 70 µm ≤ D₂ ≤ 120 µm, so that the conductive performance of the second conductive layer can be improved by controlling the thickness D₂ of the second conductive layer, thereby increasing the energy density of the battery.

In some implementations, a material of the second conductive layer includes conductive carbon, and a thickness D₂ of the second conductive layer satisfies: 10 µm ≤ D₂ ≤ 70 µm. In the embodiments of this application, under a condition that the material of the second conductive layer is set to be conductive carbon, since the conductive carbon is a fluffy structure with a large porosity, after the second conductive layer is applied on the edge region, compaction treatment needs to be performed to reduce a porosity of the second conductive layer. In addition, the thickness D₂ of the second conductive layer on the surface of the edge region is set to satisfy 10 µm ≤ D₂ ≤ 70 µm, so that the conductive performance of the second conductive layer can be improved by controlling the thickness D₂ of the second conductive layer, thereby increasing the energy density of the battery.

In some implementations, the first layer includes an insulating layer. In this way, in the embodiments of this application, providing the insulating layer on the surface of the edge region can improve the insulation performance of the electrode sheet in the edge region and effectively reduce the deposition of metal at an edge position of the electrode sheet, thereby improving the yield of the battery cell.

In some implementations, a thickness D₃ of the insulating layer satisfies: 5 µm ≤ D₃ ≤ 100 µm, preferably 5 µm ≤ D₃ ≤ 20 µm. In this way, in the embodiments of this application, the material of the second conductive layer is set to be the insulating layer, and the thickness D₃ of the insulating layer is set to satisfy 5 µm ≤ D₃ ≤ 100 µm, preferably 5 µm ≤ D₃ ≤ 20 µm, so that the deposition of metal ions at the edge position of the electrode sheet can be reduced by adjusting the thickness D₃ of the insulating layer, thereby facilitating the processing and manufacturing of the electrode sheet, and improving the manufacturing performance of the battery.

In some implementations, a material of the insulating layer includes at least one of the following materials: boehmite, polyvinylidene fluoride, ethylene propylene diene monomer rubber, and polyimide. In this way, in the embodiments of this application, the material of the insulating layer is set to include at least one of the following materials: boehmite, polyvinylidene fluoride, ethylene propylene diene monomer rubber, and polyimide, so that the insulation performance of the electrode sheet in the edge region can be significantly improved, and the deposition of metal ions at the edge position of the electrode sheet can be reduced, thereby facilitating the processing and manufacturing of the electrode sheet, and improving the manufacturing performance of the battery.

In some implementations, the edge region includes a first edge region, and the first edge region is connected to a side of the coating region away from the tab region; and/or the edge region includes a second edge region, and the second edge region is connected between the tab region and the coating region.

In the embodiments of this application, the edge region includes the first edge region, and the first edge region is connected to the side of the coating region away from the tab region; and/or the edge region includes the second edge region, and the second edge region is connected between the tab region and the coating region. In this way, when the to-be-cut electrode sheet is cut, an edge of the edge region is a cutting edge, and the porosity of the second conductive layer is less than the porosity of the first conductive layer, that is, a density of the second conductive layer is higher than the density of the first conductive layer. This can effectively alleviate the coating fall-off problem at the edge region of the to-be-cut electrode sheet during the cutting process, thereby reducing the risk of internal short circuit of the battery cell caused by overlapping of the positive electrode sheet and the negative electrode sheet, and improving the yield of the battery cell.

According to a second aspect, a battery cell is provided, including an electrode assembly, where the electrode assembly includes the electrode sheet according to any one of the foregoing implementations of the first aspect.

In some implementations, the electrode sheet is a negative electrode sheet, the electrode assembly further includes a positive electrode sheet, and an insulating layer is provided at a position of a region of the positive electrode sheet corresponding to an edge region of the negative electrode sheet.

In the embodiments of this application, the electrode sheet is the negative electrode sheet, and the electrode assembly further includes the positive electrode sheet. The insulating layer is provided at the position of the region of the positive electrode sheet corresponding to the edge region of the negative electrode sheet, so that when metal ions are precipitated on a surface of the edge region of the negative electrode sheet, due to the provision of the insulating layer, the risk of internal short circuit of the battery cell caused by overlapping of the positive electrode sheet and the negative electrode sheet can be effectively reduced, thereby improving the yield of the battery cell.

In some implementations, the battery cell is an alkali metal battery cell. In this way, in the embodiments of this application, the battery cell is set to be the alkali metal battery cell, so that the energy density of the battery and the reliability of the service performance can be improved.

According to a third aspect, a battery is provided, including the battery cell according to any one of the foregoing implementations of the second aspect.

According to a fourth aspect, an electric device is provided, including: the battery according to the third aspect, where the battery is configured to supply electrical energy to the electric device.

In some implementations, the electric device may be a vehicle, a ship, or a spacecraft.

According to a fifth aspect, a method for preparing an electrode sheet is provided, including: providing a second current collector, where the second current collector includes a second body and a tab forming region connected to an edge of the second body, and the second body includes a coating region and a cutting region; applying a first conductive layer on a surface of the coating region; applying a first layer on a surface of the cutting region; and performing cutting in the cutting region to form the electrode sheet according to any one of the possible implementations in the first aspect; where a porosity of the first layer is less than a porosity of the first conductive layer.

In the embodiments of this application, the second current collector includes the second body, the first conductive layer is applied on the surface of the coating region, and the first layer is applied on the surface of the cutting region, so that when cutting is performed in the cutting region, since the porosity of the first layer is less than the porosity of the first conductive layer, that is, a density of the first layer is higher than a density of the first conductive layer, the coating fall-off problem generated during the cutting process of the to-be-cut electrode sheet in the cutting region can be improved by increasing the density of the first layer, thereby reducing the risk of internal short circuit of the battery cell caused by overlapping of the positive electrode sheet and the negative electrode sheet, and improving the yield of the battery cell.

In some implementations, before the performing cutting in the cutting region, the method further includes: applying the first layer on a surface of a region of the tab forming region close to the second body. In this way, in the embodiments of this application, the first layer is applied on the surface of the region of the tab forming region close to the second body, so that the tab forming region can be reinforced, thereby reducing deformation and cracking of the to-be-cut electrode sheet during the cutting process and subsequent winding process, thereby improving the service performance of a battery.

In some implementations, before the performing cutting in the cutting region, the method further includes: applying the first layer on a surface of the first conductive layer away from the second current collector. In this way, in the embodiments of this application, the first layer is applied on the surface of the first conductive layer away from the second current collector, during the cutting process of the to-be-cut electrode sheet, for example, during laser die-cutting, the thermal influence on the first conductive layer close to the cutting region during the laser die-cutting process can be reduced, and the ablation phenomenon at the edge of the cutting position can be reduced, thereby improving the service performance of the battery.

In some implementations, the first layer includes a second conductive layer. In this way, in the embodiments of this application, providing the second conductive layer on the surface of the cutting region can increase a deposition area of metal ions on the target electrode sheet and improve the conductive performance of the electrode sheet, thereby increasing the energy density of the battery.

In some implementations, the first layer includes an insulating layer. In this way, in the embodiments of this application, providing the insulating layer on the surface of the cutting region can improve the insulation performance of the electrode sheet in the edge region and effectively reduce the deposition of metal at an edge position of the electrode sheet, thereby improving the yield of the battery cell.

In some implementations, the coating region includes at least two coating sub-regions; a first cutting sub-region of the cutting region is provided between two of the coating sub-regions; and the method further includes: performing cutting in the first cutting sub-region to form a first edge region on a side of the coating region away from the tab forming region.

In the embodiments of this application, the first cutting sub-region of the cutting region is provided between two of the coating sub-regions, and cutting is performed in the first cutting sub-region to form the first edge region on the side of the coating region away from the tab forming region. Since a porosity of the first layer applied on the first cutting sub-region is less than the porosity of the first conductive layer, that is, a density of the first layer is higher than a density of the first conductive layer, the coating fall-off problem during the cutting process can be reduced, thereby reducing the risk of internal short circuit of the battery cell, and improving the yield of the battery cell.

In some implementations, a second cutting sub-region of the cutting region is provided between the tab forming region and the coating region; and the method further includes: performing cutting in the second cutting sub-region to form a tab region and a second edge region of a target electrode sheet, where the second edge region is connected between the tab region and the coating region. In this way, in the embodiments of this application, when the to-be-cut electrode sheet is subjected to cutting treatment, for example, laser die-cutting treatment, a die-cutting position is located in the second cutting sub-region between the tab forming region and the coating region. Since a porosity of the first layer coated in the second cutting sub-region is less than the porosity of the first conductive layer, that is, the density of the first layer is higher than the density of the first conductive layer, the ablation phenomenon at the die-cutting position in the cutting region during the laser die-cutting process can be reduced, and the coating fall-off phenomenon during the cutting process can be reduced, thereby reducing the risk of internal short circuit of the battery cell, and improving the yield of the battery cell.

### BRIEF DESCRIPTION OF DRAWINGS

To more clearly illustrate the technical solutions of the embodiments of this application, the accompanying drawings to be used in the embodiments of this application will be briefly described below. Apparently, the accompanying drawings described below are only some embodiments of this application. For those of ordinary skill in the art, other accompanying drawings can also be obtained based on these accompanying drawings without creative efforts.
FIG. 1 is a schematic structural diagram of a vehicle according to an embodiment of this application.
FIG. 2 is a schematic structural diagram of a battery according to an embodiment of this application.
FIG. 3 is a schematic structural diagram of a battery cell according to an embodiment of this application.
FIG. 4 is a schematic cross-sectional view of an electrode sheet according to an embodiment of this application.
FIG. 5 is a schematic cross-sectional view of an electrode sheet according to another embodiment of this application.
FIG. 6 is a schematic cross-sectional view of an electrode sheet according to another embodiment of this application.
FIG. 7 is a schematic cross-sectional view of an electrode sheet according to another embodiment of this application.
FIG. 8 is a schematic cross-sectional view of an electrode sheet according to another embodiment of this application.
FIG. 9 is a schematic cross-sectional view of an electrode sheet according to another embodiment of this application.
FIG. 10 is a schematic cross-sectional view of an electrode sheet according to another embodiment of this application.
FIG. 11 is a schematic cross-sectional view of an electrode sheet according to another embodiment of this application.
FIG. 12 is a schematic partial cross-sectional view of an electrode assembly according to an embodiment of this application.
FIG. 13 is a schematic flowchart of a method for preparing an electrode sheet according to an embodiment of this application.
FIG. 14 is a schematic cross-sectional view of a to-be-cut electrode sheet according to an embodiment of this application.
FIG. 15 is a schematic cross-sectional view of a to-be-cut electrode sheet according to another embodiment of this application.
FIG. 16 is a schematic cross-sectional view of a to-be-cut electrode sheet according to another embodiment of this application.
FIG. 17 is a schematic cross-sectional view of a to-be-cut electrode sheet according to another embodiment of this application.

In the accompanying drawings, the accompanying drawings are not drawn to actual scale.

### DESCRIPTION OF EMBODIMENTS

The embodiments of this application will be further described in detail below in conjunction with the accompanying drawings and embodiments. The detailed description of the following embodiments and the accompanying drawings are used to exemplarily illustrate the principles of the embodiments of this application, but cannot be used to limit the scope of the embodiments of this application, that is, the embodiments of this application are not limited to the described embodiments.

Unless otherwise defined, all technical and scientific terms used in the embodiments of this application have the same meanings as commonly understood by those skilled in the art to which the embodiments of this application belong. The terms used in this specification are only for the purpose of describing specific embodiments, and are not intended to limit the embodiments of this application. The terms "comprise", "include", "have", and any variations thereof in the specification, claims, and above description of the accompanying drawings of this application are intended to cover non-exclusive inclusion.

In the description of the embodiments of this application, technical terms such as "first" and "second" are only used to distinguish different objects, and cannot be understood as indicating or implying relative importance or implicitly indicating the number, specific order, or primary-secondary relationship of the indicated technical features. In the description of the embodiments of this application, "a plurality of" means two or more, unless otherwise clearly and specifically defined.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments. Those skilled in the art explicitly and implicitly understand that the embodiments described in this application can be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

It should be understood that in the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by technical terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", and "circumferential" are based on the orientations or positional relationships shown in the accompanying drawings, and are merely for ease and brevity of description of the embodiments of this application rather than indicating or implying that the means or elements mentioned must have specific orientations or must be constructed or manipulated according to specific orientations, and therefore shall not be construed as any limitation on the embodiments of this application.

In the description of the embodiments of this application, unless otherwise clearly specified and limited, technical terms "mounting", "connection", "join", and "fastening" should be understood in their general senses. For example, they may refer to a fixed connection, a detachable connection, or an integral connection, may refer to a mechanical connection or an electrical connection, and may refer to a direct connection, an indirect connection through an intermediary, an internal communication between two elements, or an interaction between two elements. For those of ordinary skill in the art, the specific meanings of the above terms in the embodiments of this application can be understood according to specific circumstances.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments. Those skilled in the art explicitly and implicitly understand that the embodiments described in this application can be combined with other embodiments.

The battery mentioned in the embodiments of this application may include one or more battery cells to provide a single physical module with a higher voltage and capacity. When a plurality of battery cells are provided, the plurality of battery cells are connected in series, parallel, or series-parallel through a busbar.

In some implementations, the battery may be a battery module. When a plurality of battery cells are provided, the plurality of battery cells are arranged and fixed to form a battery module.

In some implementations, the battery may be a battery pack. The battery pack includes a box and a battery cell, where the battery cell or the battery module is accommodated in the box.

In some implementations, the box may be part of a chassis structure of a vehicle. For example, part of the box may become at least part of a floor of the vehicle, or part of the box may become at least part of a cross beam and longitudinal beam of the vehicle.

In some implementations, the battery may be an energy storage device. The energy storage device includes an energy storage container, an energy storage cabinet, and the like.

It should be understood that the battery cell in the embodiments of this application includes but is not limited to a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, and a lead storage battery.

In some implementations, the battery cells in the embodiments of this application may be a metal battery. Specifically, the metal battery may include a lithium metal secondary battery, a sodium metal battery, or a magnesium metal battery.

In some implementations, a battery cell generally includes an electrode assembly. The electrode assembly includes a positive electrode, a negative electrode, and a separator. During the charging and discharging process of the battery cell, active ions (such as lithium ions) are intercalated and deintercalated back and forth between the positive electrode and the negative electrode. The separator is disposed between the positive electrode and the negative electrode to prevent short circuits between the positive and negative electrodes and allow active ions to pass through.

In some implementations, the positive electrode may be a positive electrode sheet, and the positive electrode sheet may include a positive electrode current collector and a positive electrode active material provided on at least one surface of the positive electrode current collector.

As an example, the positive electrode current collector has two opposite surfaces in its own thickness direction, and the positive electrode active material is provided on any one or both of the two opposite surfaces of the positive electrode current collector.

As an example, the positive electrode current collector may adopt a metal foil or a composite current collector. For example, as the metal foil, aluminum or stainless steel coated with silver on surface, stainless steel, copper, aluminum, nickel, carbon electrode, carbon, nickel, or titanium may be used. The composite current collector may include a polymer substrate and a metal layer. The composite current collector may be formed by forming a metal material (aluminum, aluminum alloy, nickel, nickel alloy, titanium, titanium alloy, silver, or silver alloy) on a polymer substrate (such as a substrate of polypropylene, polyethylene terephthalate, polybutylene terephthalate, polystyrene, or polyethylene).

In some implementations, the positive electrode may adopt foam metal. The foam metal may be foamed nickel, foamed copper, foamed aluminum, foamed alloy, foamed carbon, or the like. When the foam metal is used as the positive electrode, the surface of the foam metal may not be provided with a positive electrode active material. Certainly, the surface of the foam metal may alternatively be provided with a positive electrode active material. As an example, a lithium source material, potassium metal, or sodium metal may also be filled and/or deposited in the foam metal. The lithium source material is lithium metal and/or a lithium-rich material.

In some implementations, the negative electrode may be a negative electrode sheet, and the negative electrode sheet may include a negative electrode current collector.

As an example, the negative electrode current collector may adopt a metal foil, foam metal, or a composite current collector. For example, as the metal foil, aluminum or stainless steel coated with silver on surface, stainless steel, copper, aluminum, nickel, carbon electrode, carbon, nickel, or titanium may be used. The composite current collector may include a polymer substrate and a metal layer. The foam metal may be foamed nickel, foamed copper, foamed aluminum, foamed alloy, foamed carbon, or the like. The composite current collector may be formed by forming a metal material (copper, copper alloy, nickel, nickel alloy, titanium, titanium alloy, silver, silver alloy, or the like) on a polymer substrate (such as a substrate of polypropylene, polyethylene terephthalate, polybutylene terephthalate, polystyrene, or polyethylene).

In some implementations, the battery cell in the embodiments of this application may be an anode-free metal battery.

In some implementations, the battery cells in the embodiments of this application may be an anode-free sodium secondary battery.

The anode-free sodium secondary battery refers to a battery cell constructed without actively providing a negative electrode active material layer on a negative electrode side during the manufacturing process of the battery cell. For example, no sodium metal or no carbon active material layer is provided at the negative electrode by processes such as coating or deposition during the manufacturing process of the battery cell to form the negative electrode active material layer. During initial charge, sodium ions obtain electrons on an anode side to deposit on the surface of the current collector to form a sodium metal phase. During discharge, metal sodium can be converted to sodium ions and return to the positive electrode to achieve cyclic charging and discharging. Compared with other sodium secondary batteries, the anode-free sodium secondary battery cell can obtain a higher energy density because there is no negative electrode active material layer.

In some implementations, in order to improve the performance of the battery cell, some functional coatings, such as carbon materials, metal oxides, and alloys may be provided on the negative electrode side of the anode-free sodium secondary battery to improve the conductivity of the negative electrode current collector and the uniformity of deposited sodium metal.

In some implementations, the positive electrode current collector may be made of aluminum, and the negative electrode current collector may be made of copper.

In some implementations, the electrode assembly further includes a separator, where the separator is disposed between the positive electrode and the negative electrode.

In some implementations, the separator is a separator film. The embodiments of this application have no particular limitation on the type of the separator film, and any well-known porous separator film with good chemical stability and mechanical stability can be selected.

As an example, a main material of the separator film may be selected from at least one of glass fiber, non-woven fabric, polyethylene, polypropylene, polyvinylidene fluoride, and ceramic.

In some implementations, the separator is a solid electrolyte. The solid electrolyte is provided between the positive electrode and the negative electrode for transmitting ions and isolating the positive and negative electrodes.

In some implementations, the battery cell further includes an electrolyte, and the electrolyte plays a role in conducting ions between the positive and negative electrodes. The embodiments of this application have no specific limitation on the type of the electrolyte, and the electrolyte can be selected according to needs. The electrolyte may be in a liquid state, a gel state, or a solid state.

In some implementations, the electrode assembly may be a wound structure. The positive electrode sheet and the negative electrode sheet are wound into a wound structure.

In some implementations, the electrode assembly is a laminated structure. As an example, a plurality of positive electrode sheets and a plurality of negative electrode sheets may be provided respectively, and the plurality of positive electrode sheets and the plurality of negative electrode sheets are alternately stacked.

As an example, a plurality of positive electrode sheets may be provided, and the negative electrode sheet is folded to form a plurality of folded sections that are stacked, with one positive electrode sheet sandwiched between adjacent folded sections.

As an example, both the positive electrode sheet and the negative electrode sheet are folded to form a plurality of folded sections that are stacked.

As an example, a plurality of separators may be provided and respectively disposed between any adjacent positive electrode sheets or negative electrode sheets.

As an example, the separators may be continuously provided and disposed between any adjacent positive electrode sheets or negative electrode sheets by folding or winding.

In some implementations, the electrode assembly may be cylindrical, flat, prismatic, or of other shapes.

In some implementations, the electrode assembly is provided with a tab, where the tab can lead out current from the electrode assembly. The tab includes a positive electrode tab and a negative electrode tab.

In some implementations, the battery cell may include a shell. The shell is configured to encapsulate components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

It should be understood that in the embodiments of this application, an energy storage device is a device that stores energy and typically can accommodate one or more energy storage elements, where the energy storage element may be, for example, a battery. A battery can also be called a battery pack which includes a box and one or more battery cells encapsulated by the box. For example, the battery cell may include but is not limited to: a lithium-ion secondary battery, a lithium-ion primary battery, a lithium-sulfur battery, a sodium-lithium-ion battery, a sodium-ion battery, a magnesium-ion battery, or the like. The battery cell may be cylindrical, flat, cuboid, or of other shapes.

In some implementations, a functional component may also be provided in the energy storage device to manage or assist operations of a plurality of energy storage elements. For example, a thermal management component may be provided in the energy storage device. The thermal management component includes but is not limited to an air conditioning component, a fan component, a water-cooling pipeline, and the like, which can be configured to perform thermal management of the interior of the energy storage device so as to adjust the temperature inside the energy storage device. As another example, a control box may be provided in the energy storage device to monitor and control various states of the energy storage device.

Currently, the design of an electrode sheet in a battery cell is crucial to the yield and service performance of the battery cell. Typically, a conductive coating with a low density is applied on a surface of the electrode sheet. In a subsequent die-cutting process, if the power of the laser die-cutting is low, there may be a risk that the conductive coating is not cut off, and the remaining part is likely to form burrs; and when the power of the laser die-cutting is high, ablation occurs at an edge of a cutting region, making the conductive coating brittle and prone to falling off, and causing dust and burrs, which may lead to the risk of internal short circuit of the battery cell due to overlapping of a positive electrode sheet and a negative electrode sheet, affecting the yield of the battery cell. Therefore, how to provide an electrode sheet to improve the yield of the battery cell has become an urgent technical problem to be solved in the art.

In view of this, embodiments of this application provide an electrode sheet including: a first current collector, where the first current collector includes a first body and a tab region connected to an edge of the first body, and the first body includes a coating region and an edge region; a first conductive layer, the first conductive layer being provided on a surface of the coating region; and a first layer, the first layer being provided on a surface of the edge region; where a porosity of the first layer is less than a porosity of the first conductive layer. Thus, in the embodiments of this application, the first current collector includes the first body, the first conductive layer is provided on the surface of the coating region of the first body, the first layer is provided in the edge region of the first body, and the porosity of the first layer is less than the porosity of the first conductive layer, that is, a density of the first layer is higher than a density of the first conductive layer. This can increase the density of the first layer to alleviate the coating fall-off problem of a to-be-cut electrode sheet during the cutting process of the edge region, thereby reducing the risk of internal short circuit of the battery cell caused by overlapping of the positive electrode sheet and the negative electrode sheet, and improving the yield of the battery cell.

The electric device may be a vehicle, a mobile phone, a portable device, a notebook computer, a ship, a spacecraft, an electric toy, an electric tool, or the like. The vehicle may be a fuel vehicle, a gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railwayspecific tool, for example, an electric drill, an electric grinder, an electric wrench, an electric screwdriver, an electric hammer, an electric impact drill, a concrete vibrator, and an electric planer.

It should be understood that the technical solutions described in the embodiments of this application are applicable to not only the electric devices described above but also all devices using batteries. However, for brevity of description, in the following embodiments, an electric device being a vehicle is used as an example for description.

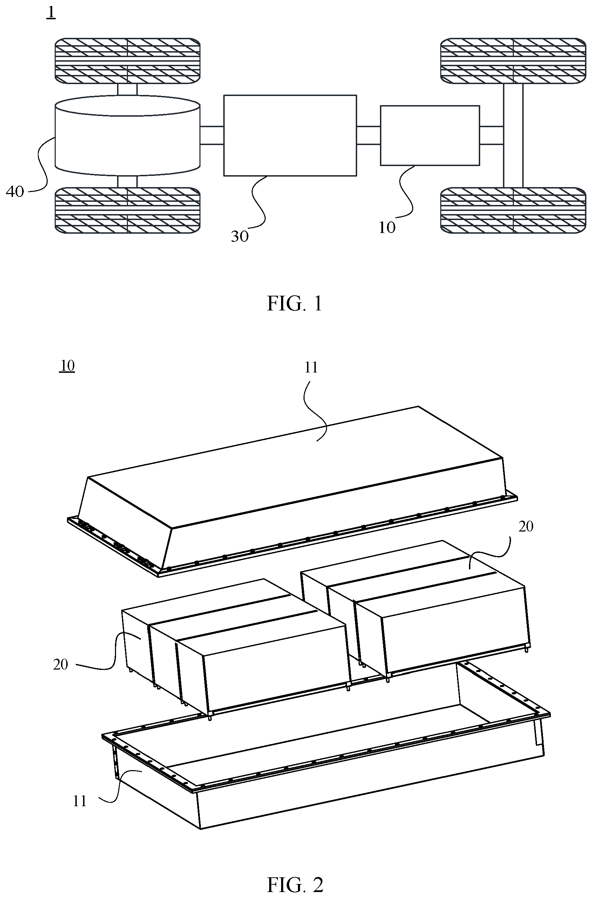

For example, as shown in FIG. 1 which is a schematic structural diagram of a vehicle 1 according to an embodiment of this application, the vehicle 1 may be a fuel vehicle, a gas vehicle, or a new energy vehicle. The new energy vehicle may be a battery electric vehicle, a hybrid electric vehicle, a range-extended electric vehicle, or the like. A motor 40, a controller 30, and a battery 10 may be provided inside the vehicle 1. The controller 30 is configured to control the battery 10 to supply power to the motor 40. For example, the battery 10 may be provided at the bottom, front, or rear of the vehicle 1. The battery 10 may be configured to supply power to the vehicle 1. For example, the battery 10 may serve as an operating power source of the vehicle 1 which is configured for a circuit system of the vehicle 1, for example, to satisfy power needs of start, navigation, and running of the vehicle 1. In another implementation of this application, the battery 10 can not only serve as the operating power source of the vehicle 1, but also as a driving power source of the vehicle 1, replacing or partially replacing fuel or natural gas to provide driving traction for the vehicle 1.

In order to meet different power usage needs, the battery 10 in the embodiments of this application may be a battery cell group or a battery pack. The battery 10 may include at least one battery cell group. The battery cell group includes a plurality of battery cells, where the plurality of battery cells may be electrically connected in series, parallel, or series-parallel to form the battery 10, where being connected in series-parallel means a combination of series and parallel connections. The battery 10 may also be called a battery pack. For example, a plurality of battery cells may be connected in series, parallel, or series-parallel to form a battery module first, and then a plurality of battery modules are connected in series, parallel, or series-parallel to form a battery 10. That is, the plurality of battery cells may be directly combined into the battery 10. Alternatively, the plurality of battery cells may be first combined into battery modules, and then the battery modules are combined into the battery 10.

In some implementations, the battery 10 may include a plurality of battery cells. For example, as shown in FIG. 2 which is a schematic structural diagram of a battery 10 according to an embodiment of this application, the battery 10 may include a plurality of battery cells 20. The battery 10 may further include a box 11. The interior of the box 11 is a hollow structure. The plurality of battery cells 20 are accommodated in the box 11. For example, the plurality of battery cells 20 are combined in parallel, series, or series-parallel and then placed in the box 11.

In some implementations, the battery 10 may further include other structures. Details are not described herein again. For example, the battery 10 may further include a busbar. The busbar is configured to achieve electrical connection between the plurality of battery cells 20, such as a parallel connection, a series connection, or a series and parallel connection. Specifically, the busbar may be connected to electrode terminals of the battery cells 20 so as to achieve electrical connection between the battery cells 20. Further, the busbar may be fixed to the electrode terminals of the battery cells 20 by welding. The electrical energy of the plurality of battery cells 20 may be further led out through a conductive mechanism passing through the box. Optionally, the conductive mechanism may also belong to the busbar.

In the embodiments of this application, the number of battery cells 20 may be set to any value according to different power needs. The plurality of battery cells 20 may be connected in series, parallel, or series-parallel to achieve a high capacity or power. Since the number of battery cells 20 included in each battery 10 may be large, for ease of installation, the battery cells 20 may be grouped, and each group of battery cells 20 forms a battery module. The number of battery cells 20 included in the battery module is not limited and may be set according to needs. The battery 10 may include a plurality of battery modules. The battery modules may be connected in series, parallel, or series-parallel.

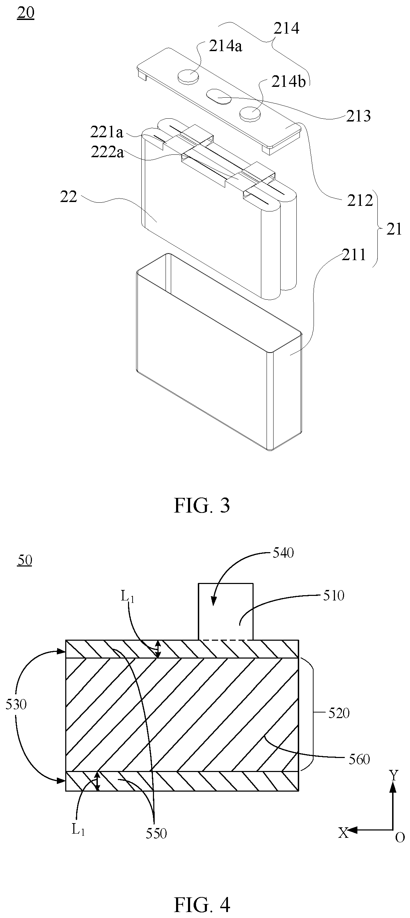

As shown in FIG. 3 which is a schematic structural diagram of a battery cell 20 according to an embodiment of this application, the battery cell 20 includes one or more electrode assemblies 22, a housing 211, and a cover plate 212. The housing 211 and the cover plate 212 form a shell or a battery box 21. Walls of the housing 211 and walls of the cover plate 212 are both referred to as walls of the battery cell 20. For a cuboid battery cell 20, the walls of the housing 211 include a bottom wall and four side walls. The housing 211 is determined according to the shape of one or more electrode assemblies 22 after combined. For example, the housing 211 may be a hollow cuboid, cube, or cylinder. One surface of the housing 211 has an opening, so that one or more electrode assemblies 22 can be placed in the housing 211. For example, when the housing 211 is a hollow cuboid or cube, one plane of the housing 211 is an opening surface, that is, the plane does not have a wall, so that the inside and outside of the housing 211 are in communication with each other. When the housing 211 may be a hollow cylinder, an end surface of the housing 211 is an opening surface, that is, the end surface does not have a wall, so that the inside and outside of the housing 211 are in communication with each other. The cover plate 212 covers the opening and is connected to the housing 211 to form a closed cavity for placing the electrode assembly 22. The housing 211 is filled with an electrolyte, such as a liquid electrolyte.

The battery cell 20 may further include two electrode terminals 214. The two electrode terminals 214 may be disposed on the cover plate 212. The cover plate 212 is typically in a flat plate shape. The two electrode terminals 214 are fixed on the flat surface of the cover plate 212. The two electrode terminals 214 are a positive electrode terminal 214a and a negative electrode terminal 214b respectively. Each electrode terminal 214 is correspondingly provided with a connecting member. Alternatively, the connecting member may be called a current collector which is located between the cover plate 212 and the electrode assembly 22 and configured to achieve electrical connection between the electrode assembly 22 and the electrode terminal 214.

As shown in FIG. 3, each electrode assembly 22 has a first tab 221a and a second tab 222a. The polarities of the first tab 221a and the second tab 222a are opposite. For example, when the first tab 221a is a positive electrode tab, the second tab 222a is a negative electrode tab.

In the battery cell 20, one or more electrode assemblies 22 may be provided according to actual use needs. As shown in FIG. 3, two independent electrode assemblies 22 are provided in the battery cell 20.

A pressure relief mechanism 213 may be further provided on the battery cell 20. The pressure relief mechanism 213 is configured to be actuated to relieve internal pressure or temperature when the internal pressure or temperature of the battery cell 20 reaches a threshold.

The pressure relief mechanism 213 may be various possible pressure relief structures. For example, the pressure relief mechanism 213 may be a temperature-sensitive pressure relief mechanism. The temperature-sensitive pressure relief mechanism is configured to be able to melt when the internal temperature of the battery cell 20 provided with the pressure relief mechanism 213 reaches a threshold; and/or the pressure relief mechanism 213 may be a pressure-sensitive pressure relief mechanism. The pressure-sensitive pressure relief mechanism is configured to be able to rupture when the internal pressure of the battery cell 20 provided with the pressure relief mechanism 213 reaches a threshold.

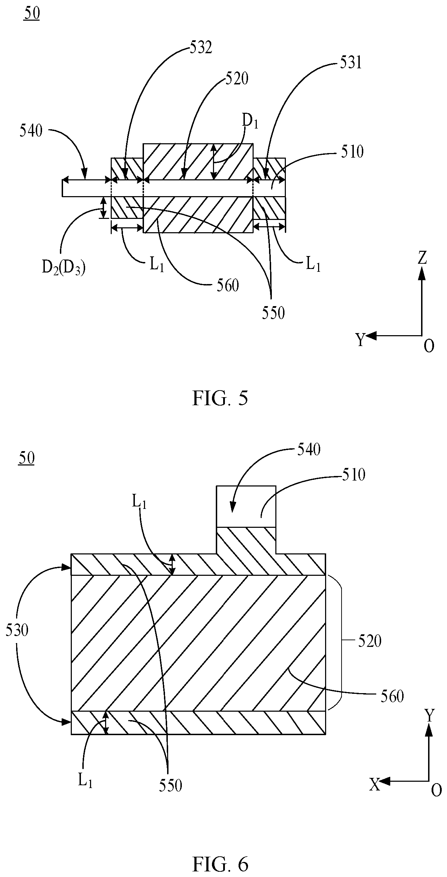

FIG. 4 is a schematic cross-sectional view of an electrode sheet 50 according to an embodiment of this application. FIG. 5 is a schematic cross-sectional view of an electrode sheet 50 according to another embodiment of this application. FIGs. 4 and 5 can be understood as schematic cross-sectional views of a same electrode sheet 50 in different directions. Exemplarily, FIG. 4 may be a schematic cross-sectional view of the electrode sheet 50 perpendicular to a thickness direction of the electrode sheet 50, and FIG. 5 may be a schematic cross-sectional view of the electrode sheet 50 perpendicular to a length direction of the electrode sheet 50.

It should be understood that in the embodiments of this application, for ease of description, three directions are defined here. As shown in FIGs. 4 and 5, a first direction X may be the length direction of the electrode sheet 50, and the first direction X is perpendicular to a second direction Y and a third direction Z. The second direction Y may be a width direction of the electrode sheet 50, and the second direction Y is perpendicular to the first direction X and the third direction Z. The third direction Z may be a height direction of the electrode sheet 50, the third direction Z is perpendicular to the first direction X and the second direction Y, and the third direction Z may also refer to the thickness direction of the electrode sheet 50.

In some implementations, as shown in FIGs. 4 to 5, the electrode sheet 50 includes: a first current collector 510, a first conductive layer 560, and a first layer 550. The first current collector 510 includes a first body and a tab region 540 connected to an edge of the first body. The first body includes a coating region 520 and an edge region 530. The first conductive layer 560 is provided on a surface of the coating region 520. The first layer 550 is provided on a surface of the edge region 530. A porosity of the first layer 550 is less than a porosity of the first conductive layer 560.

It should be understood that in the embodiments of this application, the first conductive layer 560 being provided on the surface of the coating region 520 may mean that the first conductive layer 560 may be provided on at least one of two surfaces of the coating region 520 perpendicular to the thickness direction of the coating region 520. In the embodiments of this application, the first layer 550 being provided on the surface of the edge region 530 may mean that the first layer 550 may be provided on at least one of two surfaces of the edge region 530 perpendicular to the thickness direction of the edge region 530.

It should also be understood that in the embodiments of this application, the rectangular electrode sheet 50 shown in FIGs. 4 and 5 above is only an example, and the shape of the electrode sheet 50 includes but is not limited to square, parallelogram, and polygon.

It should also be understood that in the embodiments of this application, the first current collector 510 may be a negative electrode current collector or a positive electrode current collector. When the first current collector 510 is a negative electrode current collector, the negative electrode current collector may be a metal foil, foam metal, or a composite current collector. When the first current collector 510 is a positive electrode current collector, the positive electrode current collector may be a metal foil or a composite current collector.

It should also be understood that in the embodiments of this application, the edge region 530 can be understood as a region provided at an edge of the first body of the first current collector 510. In some implementations, the edge region 530 may be provided in a region of the first body close to the tab region 540. In some other implementations, the edge region 530 may alternatively be provided in a region of the first body away from the tab region 540.

It should also be understood that in the embodiments of this application, the porosities of the first layer 550 and the first conductive layer 560 in the embodiments of this application can be tested using a true density method. A true density refers to an actual mass of a solid substance per unit volume of a material in an absolutely dense state, that is, a density after removing internal voids or voids between particles. Typically, a true density analyzer can be used to test an actual volume and a true density of a sample. The true density analyzer utilizes the Archimedes' principle gas expansion displacement method and uses the Boyle's law of small molecule diameter inert gas under certain conditions to accurately test the true volume of the sample by measuring the volume of gas displaced by the sample in a test chamber.

In some implementations, when the porosity is tested using the true density method, a sample under test is prepared first. For example, an electrode sheet with only the first layer 550 provided on the surface can be obtained, and then the sample is placed in a true density tester, with helium as a medium gas. After a measurement chamber in the true density tester is gradually pressurized to a preset value, helium is filled into an expansion chamber. Equilibrium pressures of the two chambers in the experimental process are automatically recorded by the instrument. A true volume V₁ of the sample is calculated according to the Boyle's law. Then, an apparent volume V₂ of the sample is measured, and the apparent volume V₂ can be calculated by measuring a thickness of the sample and an area of a surface perpendicular to a thickness direction of the sample. Secondly, a difference between the apparent volume V₂ and the true volume V₁ can be further calculated, and a porosity of the sample can be characterized by a ratio of the difference to the true volume V₁ of the sample. It should also be understood that in the embodiments of this application, the true volume V₁ of the sample can be measured multiple times using the true density tester, and an average of the multiple true volumes V₁ is taken to calculate the porosity of the sample.

In the embodiments of this application, the first current collector 510 includes the first body, the first conductive layer 560 is provided on the surface of the coating region 520 of the first body, the first layer 550 is provided in the edge region 530 of the first body, and the porosity of the first layer 550 is less than the porosity of the first conductive layer 560, that is, a density of the first layer 550 is higher than a density of the first conductive layer 560. This can increase the density of the first layer 550 to improve the coating fall-off problem of a to-be-cut electrode sheet during the cutting process of the edge region 530, thereby reducing the risk of internal short circuit of the battery cell 20 caused by overlapping of the positive electrode sheet 502 and the negative electrode sheet 501, and improving the yield of the battery cell 20.

It should be understood that in the embodiments of this application, when the first layer 550 is applied on the surface of the edge region 530, a method includes but is not limited to the following manners: first, the first layer 550 is directly applied on the surface of the edge region 530, the porosity of the first layer 550 is less than the porosity of the first conductive layer 560 applied on the surface of the coating region 520, and a thickness of the first layer 550 may be greater than, equal to, or less than a thickness of the first conductive layer 560, and a porosity of the first layer 550 on the obtained electrode sheet 50 is less than the porosity of the first conductive layer 550; second, the first layer 550 is first applied on the surface of the edge region 530, the porosity of the first layer 550 is equal to the porosity of the first conductive layer 560, and the thickness of the first layer 550 is greater than or equal to the thickness of the first conductive layer 560, and then the first layer 550 is compacted, so that the porosity of the first layer 550 on the edge region 530 after compaction is less than the porosity of the first conductive layer 550.

In some implementations, the porosity A₁ of the first layer 550 satisfies: 0% < A₁ ≤ 50%.

It should be understood that in the embodiments of this application, the porosity A₁ of the first layer 550 refers to a percentage of a void volume in a material corresponding to the first layer 550 and a total volume of the material in a natural state. A higher porosity of the material leads to a lower compactness. It should also be understood that the porosity A₁ in the embodiments of this application may also be called a porosity degree. Specifically, a method for calculating the porosity A₁ of the first layer 550 includes but is not limited to a true density method, a buoyancy method, a gas permeation method, an image analysis method, a specific surface area method, and an adsorption method.

Exemplarily, the porosity A₁ of the first layer 550 in the embodiments of this application may be 2%, 4%, 6%, 8%, 10%, 15%, 20%, 25%, 30%, 35%, 40%, 45%, 50%, or a value in a range defined by any two of these values.

In the embodiments of this application, the porosity A₁ of the first layer 550 is less than the porosity of the first conductive layer 560, and the porosity A₁ of the first layer is set to satisfy 0% < A₁ ≤ 50%. This can increase the density of the first layer 550 to alleviate the coating fall-off problem of the to-be-cut electrode sheet during the cutting process of the edge region 530, thereby reducing the risk of internal short circuit of the battery cell 20 caused by overlapping of the positive electrode sheet 502 and the negative electrode sheet 501, and improving the yield of the battery cell 20.

In some other implementations, the porosity A₁ of the first layer 550 satisfies: 20% ≤ A₁ ≤ 30%.

Exemplarily, the porosity A₁ of the first layer 550 in the embodiments of this application may be 20%, 21%, 22%, 23%, 24%, 25%, 26%, 27%, 28%, 29%, 30%, or a value in a range defined by any two of these values.

In the embodiments of this application, the porosity A₁ of the first layer 550 is less than the porosity of the first conductive layer 560, and the porosity A₁ of the first layer 550 is set to satisfy 20% ≤ A₁ ≤ 30%. This can increase the density of the first layer 550 to further alleviate the coating fall-off problem of the to-be-cut electrode sheet during the cutting process of the edge region 530, thereby reducing the risk of internal short circuit of the battery cell 20 caused by overlapping of the positive electrode sheet 502 and the negative electrode sheet 501, and improving the yield of the battery cell 20.

In some implementations, a ratio L₁/D₁ of a dimension L₁ of the edge region 530 in a first direction to a thickness D₁ of the first conductive layer 560 satisfies: 10 ≤ L₁/D₁ ≤ 1000, preferably 20 ≤ L₁/D₁ ≤ 100, where the first direction is perpendicular to the thickness direction of the electrode sheet 50. Exemplarily, in the embodiments of this application, the first direction may be the direction Y or the direction X.

Exemplarily, the ratio L₁/D₁ of the dimension L₁ of the edge region 530 in the first direction to the thickness D₁ of the first conductive layer 560 in the embodiments of this application may be 10, 20, 30, 40, 50, 60, 70, 80, 90, 100, 200, 300, 400, 500, 600, 700, 800, 900, 1000, or a value in a range defined by any two of these values.

In the embodiments of this application, the ratio L₁/D₁ of the dimension L₁ of the edge region 530 in the first direction to the thickness D₁ of the first conductive layer 560 is set to satisfy 10 ≤ L₁/D₁ ≤ 1000; and preferably, the value of L₁/D₁ can also be set to satisfy 20 ≤ L₁/D₁ ≤ 100. This can reduce the thermal influence on the first conductive layer 560 during the laser die-cutting process, alleviating the coating fall-off problem caused by thermal expansion of the first conductive layer 560 during the cutting process of the electrode sheet 50, thereby improving the manufacturing performance of the battery 10.

In some implementations, the dimension L₁ of the edge region 530 in the first direction satisfies: 2 mm ≤ L₁ ≤ 20 mm. Exemplarily, in the embodiments of this application, the first direction may be the direction Y or the direction X.

It should be understood that in the embodiments of this application, as shown in FIG. 4, along the direction Y, the electrode sheet 50 may be provided with two edge regions 530. Exemplarily, an edge region 530 of the first body of the first current collector 510 away from the tab region 540 may be a first edge region 531, and an edge region 530 of the first body of the first current collector 510 close to the tab region 540 may be a second edge region 532. A dimension of the first edge region 531 in the direction Y may be the same as or different from a dimension of the second edge region 532 in the direction Y.

Exemplarily, the dimension L₁ of the edge region 530 in the first direction in the embodiments of this application may be 2 mm, 3 mm, 4 mm, 5 mm, 6 mm, 7 mm, 8 mm, 9 mm, 10 mm, 12 mm, 14 mm, 16 mm, 18 mm, 20 mm, or a value in a range defined by any two of these values.

In the embodiments of this application, the dimension L₁ of the edge region 530 in the first direction is set to satisfy 2 mm ≤ L₁ ≤ 20 mm, so that a dimension of the coating region 520 in the first direction is adjusted by adjusting the dimension L₁ of the edge region 530 in the first direction, thereby improving the conductive performance of the first conductive layer 560 and increasing the energy density of the battery 10.

In some other implementations, the dimension L₁ of the edge region 530 in the first direction satisfies: 3 mm ≤ L₁ ≤ 6 mm. Exemplarily, in the embodiments of this application, the first direction may be the direction Y or the direction X.

Exemplarily, the dimension L₁ of the edge region 530 in the first direction in the embodiments of this application may be 3 mm, 3.2 mm, 3.4 mm, 3.6 mm, 3.8 mm, 4 mm, 4.2 mm, 4.4 mm, 4.6 mm, 4.8 mm, 5 mm, 5.2 mm, 5.4 mm, 5.6 mm, 5.8 mm, 6 mm, or a value in a range defined by any two of these values.

In the embodiments of this application, the dimension L₁ of the edge region 530 in the first direction is set to satisfy 3 mm ≤ L₁ ≤ 6 mm, so that the dimension of the coating region 520 in the first direction can be adjusted by adjusting the dimension L₁ of the edge region 530 in the first direction, thereby further improving the conductive performance of the first conductive layer 560 and increasing the energy density of the battery 10.

In some implementations, the thickness D₁ of the first conductive layer 560 satisfies: 1 µm ≤ D₁ ≤ 50 µm.

Exemplarily, the thickness D₁ of the first conductive layer 560 may be 1 µm, 2 µm, 3 µm, 4 µm, 5 µm, 6 µm, 7 µm, 8 µm, 9 µm, 10 µm, 15 µm, 20 µm, 25 µm, 30 µm, 35 µm, 40 µm, 45 µm, 50 µm, or a value in a range defined by any two of these values.

In the embodiments of this application, the thickness D₁ of the first conductive layer 560 is set to satisfy 1 µm ≤ D₁ ≤ 50 µm, so that the conductive performance of the first conductive layer 560 can be improved by controlling the thickness D₁ of the first conductive layer 560, thereby increasing the energy density of the battery 10.

In some implementations, a material of the first conductive layer 560 includes at least one of the following materials: carbon nanotubes, graphene, conductive graphite, and conductive carbon. In this way, in the embodiments of this application, the material of the first conductive layer 560 is set to include at least one of the following materials: carbon nanotubes, graphene, conductive graphite, and conductive carbon, so that the conductive performance of the electrode sheet 50 can be improved, thereby increasing the energy density of the battery 10.

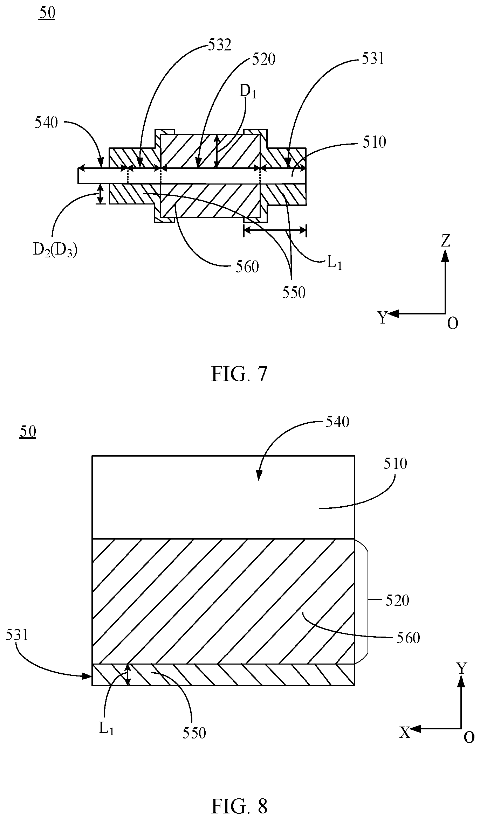

FIG. 6 is a schematic cross-sectional view of an electrode sheet 50 according to another embodiment of this application. FIG. 7 is a schematic cross-sectional view of an electrode sheet 50 according to another embodiment of this application. FIGs. 6 and 7 can be understood as schematic cross-sectional views of a same electrode sheet 50 in different directions. Exemplarily, FIG. 6 may be a schematic cross-sectional view of the electrode sheet 50 perpendicular to a thickness direction of the electrode sheet 50, and FIG. 7 may be a schematic cross-sectional view of the electrode sheet 50 perpendicular to a length direction of the electrode sheet 50.

In some implementations, as shown in FIGs. 6 and 7, the first layer 550 extends to the tab region 540.

It should be understood that in the embodiments of this application, the first layer 550 extending to the tab region 540 means that the first layer 550 may be provided on at least one of two surfaces of the tab region 540 perpendicular to a thickness direction of the tab region 540. It should also be understood that the first layer 550 may be provided on at least part of a region of the tab region 540.

In the embodiments of this application, the first layer 550 extends to the tab region 540, that is, the first layer 550 may be provided on at least part of a surface of the tab region 540, so that the tab region 540 can be reinforced, thereby reducing deformation and cracking of the electrode sheet 50 during the cutting process and subsequent winding process, improving the service performance of the battery 10, facilitating the processing and manufacturing of the electrode sheet 50, and improving the manufacturing performance of the battery 10.

In some implementations, as shown in FIG. 7, the first layer 550 further extends to a surface of the first conductive layer 560 away from the first current collector 510. In this way, in the embodiments of this application, the first layer 550 extends to the surface of the first conductive layer 560 away from the first current collector 510, thereby facilitating the processing and manufacturing of the electrode sheet 50, and improving the manufacturing performance of the battery 10.

In some implementations, the first layer 550 includes a second conductive layer.

It should be understood that in the embodiments of this application, a porosity of the second conductive layer is less than the porosity of the first conductive layer 560, that is, a density of the second conductive layer is greater than the density of the first conductive layer 560, and the second conductive layer may be provided on at least one of two surfaces of the edge region 530 perpendicular to the thickness direction of the edge region 530.

It should be understood that in the embodiments of this application, as shown in FIGs. 5 and 7, a thickness of the second conductive layer can be denoted as D₂.

In the embodiments of this application, providing the second conductive layer on the surface of the edge region 530 can increase a deposition area of metal ions on the electrode sheet 50 and improve the conductive performance of the electrode sheet 50, thereby increasing the energy density of the battery 10.

In some implementations, a material of the second conductive layer includes at least one of the following materials: carbon nanotubes, graphene, and conductive graphite. In this way, in the embodiments of this application, the material of the second conductive layer is set to include at least one of the following materials: carbon nanotubes, graphene, and conductive graphite, so that the conductive performance of the electrode sheet 50 can be significantly improved, thereby increasing the energy density of the battery 10.

In some implementations, under a condition that the material of the second conductive layer includes at least one of the following materials: carbon nanotubes, graphene, and conductive graphite, the thickness D₂ of the second conductive layer satisfies: 2 µm ≤ D₂ ≤ 150 µm, preferably 70 µm ≤ D₂ ≤ 120 µm.

Exemplarily, the thickness D₂ of the second conductive layer in the embodiments of this application may be 2 µm, 3 µm, 4 µm, 5 µm, 6 µm, 7 µm, 8 µm, 9 µm, 10 µm, 15 µm, 20 µm, 30 µm, 40 µm, 50 µm, 60 µm, 70 µm, 80 µm, 90 µm, 100 µm, 110 µm, 120 µm, 130 µm, 140 µm, 150 µm, or a value in a range defined by any two of these values.

In the embodiments of this application, when the material of the second conductive layer includes at least one of the following materials: carbon nanotubes, graphene, and conductive graphite, the thickness D₂ of the second conductive layer is set to satisfy 2 µm ≤ D₂ ≤ 150 µm; and preferably, the thickness D₂ of the second conductive layer can also be set to satisfy: 70 µm ≤ D₂ ≤ 120 µm, so that the conductive performance of the second conductive layer can be improved by controlling the thickness D₂ of the second conductive layer, thereby increasing the energy density of the battery 10.

In some implementations, the material of the second conductive layer includes conductive carbon, and the thickness D₂ of the second conductive layer satisfies: 10 µm ≤ D₂ ≤ 70 µm.

Exemplarily, the thickness D₂ of the second conductive layer in the embodiments of this application may be 10 µm, 11 µm, 12 µm, 13 µm, 14 µm, 15 µm, 16 µm, 17 µm, 18 µm, 19 µm, 20 µm, 25 µm, 30 µm, 40 µm, 50 µm, 60 µm, 70 µm, or a value in a range defined by any two of these values.

It should be understood that in the embodiments of this application, when the material of the second conductive layer is set to conductive carbon, after the conductive carbon is applied on the surface of the electrode sheet 50, since the conductive carbon is a fluffy structure with a large porosity, compaction treatment needs to be performed on the conductive carbon to reduce the porosity of the second conductive layer. In some implementations, under a condition that the porosity of the second conductive layer is less than the porosity of the first conductive layer 560, the thickness D₂ of the second conductive layer may be greater than, less than, or equal to the thickness D₁ of the first conductive layer 560.

In the embodiments of this application, under a condition that the material of the second conductive layer is set to be conductive carbon, since the conductive carbon is the fluffy structure with the large porosity, after the second conductive layer is applied on the edge region, compaction treatment needs to be performed to reduce the porosity of the second conductive layer. In addition, the thickness D₂ of the second conductive layer on the surface of the edge region is set to satisfy 10 µm ≤ D₂ ≤ 70 µm, so that the conductive performance of the second conductive layer can be improved by controlling the thickness D₂ of the second conductive layer, thereby increasing the energy density of the battery.

In some implementations, as shown in FIGs. 4 to 7, the first layer 550 includes an insulating layer.

It should be understood that in the embodiments of this application, a porosity of the insulating layer is less than the porosity of the first conductive layer 560, that is, a density of the insulating layer is greater than the density of the first conductive layer 560, and the insulating layer may be provided on at least one of two surfaces of the edge region 530 perpendicular to the thickness direction of the edge region 530.

In the embodiments of this application, when the to-be-cut electrode sheet is cut, the insulating layer is provided on the surface of the edge region 530, and the porosity of the insulating layer is less than the porosity of the first conductive layer 560, that is, the density of the insulating layer is higher than the density of the first conductive layer 560. This can effectively alleviate the coating fall-off problem during the cutting process, significantly reduce the risk of internal short circuit of the battery cell 20, and effectively reduce the deposition of metal at an edge position of the electrode sheet 50, thereby improving the yield of the battery cell 20.

It should be understood that in the embodiments of this application, as shown in FIGs. 5 and 7, a thickness of the insulating layer can be denoted as D₃.

In some implementations, the thickness D₃ of the insulating layer satisfies: 5 µm ≤ D₃ ≤ 100 µm, preferably 5 µm ≤ D₃ ≤ 20 µm.

Exemplarily, the thickness D₃ of the insulating layer in the embodiments of this application may be 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 25 µm, 30 µm, 40 µm, 50 µm, 60 µm, 70 µm, 80 µm, 90 µm, 100 µm, or a value in a range defined by any two of these values.

In the embodiments of this application, the material of the second conductive layer is set to be the insulating layer, and the thickness D₃ of the insulating layer is set to satisfy 5 µm ≤ D₃ ≤ 100 µm, preferably 5 µm ≤ D₃ ≤ 20 µm, so that the deposition of metal ions at the edge position of the electrode sheet 50 can be reduced by adjusting the thickness D₃ of the insulating layer, thereby facilitating the processing and manufacturing of the electrode sheet 50, and improving the manufacturing performance of the battery 10.

In some implementations, a material of the insulating layer includes at least one of the following materials: boehmite, polyvinylidene fluoride, ethylene propylene diene monomer rubber, and polyimide. In this way, in the embodiments of this application, the material of the insulating layer is set to include at least one of the following materials: boehmite, polyvinylidene fluoride, ethylene propylene diene monomer rubber, and polyimide, so that the insulation performance of the electrode sheet 50 in the edge region can be significantly improved, and the deposition of metal ions at the edge position of the electrode sheet 50 can be reduced, thereby facilitating the processing and manufacturing of the electrode sheet 50, and improving the manufacturing performance of the battery 10.

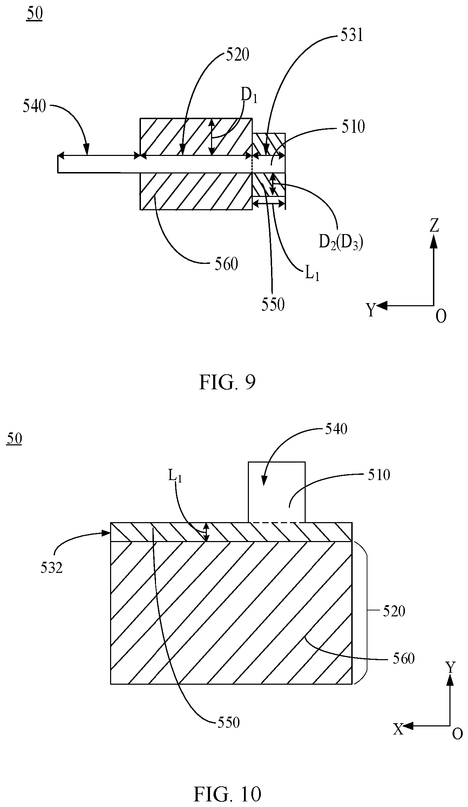

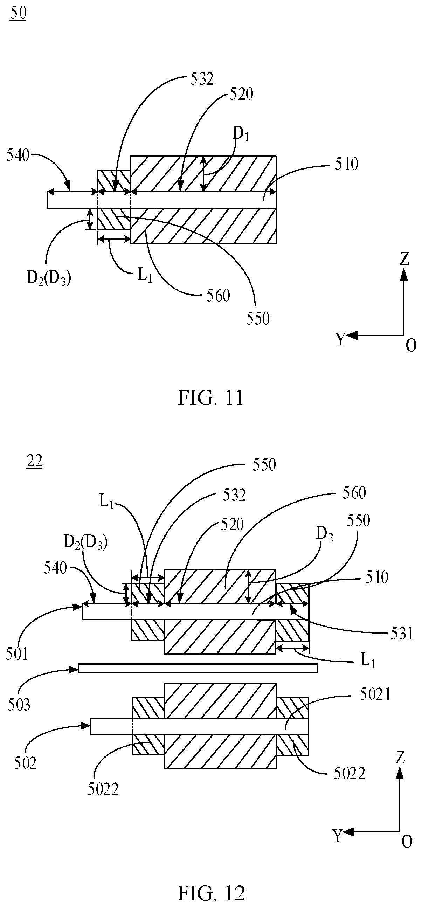

FIG. 8 is a schematic cross-sectional view of an electrode sheet 50 according to another embodiment of this application. FIG. 9 is a schematic cross-sectional view of an electrode sheet 50 according to another embodiment of this application. For example, FIGs. 8 and 9 can be understood as schematic cross-sectional views of a same electrode sheet 50 in different directions. FIG. 8 may be a schematic cross-sectional view of the electrode sheet 50 perpendicular to a thickness direction of the electrode sheet 50. FIG. 9 may be a schematic cross-sectional view of the electrode sheet 50 perpendicular to a length direction of the electrode sheet 50. FIG. 10 is a schematic cross-sectional view of an electrode sheet 50 according to another embodiment of this application. FIG. 11 is a schematic cross-sectional view of an electrode sheet 50 according to another embodiment of this application. For example, FIGs. 10 and 11 can be understood as schematic cross-sectional views of a same electrode sheet 50 in different directions. FIG. 10 may be a schematic cross-sectional view of the electrode sheet 50 perpendicular to a thickness direction of the electrode sheet 50. FIG. 11 may be a schematic cross-sectional view of the electrode sheet 50 perpendicular to a length direction of the electrode sheet 50.

In some implementations, as shown in FIGs. 4 to 11, the edge region 530 includes a first edge region 531, and the first edge region 531 is connected to a side of the coating region 520 away from the tab region 540; and/or the edge region 530 includes a second edge region 532, and the second edge region 532 is connected between the tab region 540 and the coating region 520.

Exemplarily, as shown in FIGs. 8 and 9, the first body of the first current collector 510 of the electrode sheet 50 includes one edge region 530, where the edge region 530 may be a first edge region 531, and the first edge region 531 is connected to the side of the coating region 520 away from the tab region 540. As another example, as shown in FIGs. 10 and 11, the first body of the first current collector 510 of the electrode sheet 50 includes one edge region 530, where the edge region 530 may be a second edge region 532, and the second edge region 532 is connected between the tab region 540 and the coating region 520.

In the embodiments of this application, the edge region 530 includes the first edge region 531, and the first edge region 531 is connected to the side of the coating region 520 away from the tab region 540; and/or the edge region 530 includes the second edge region 532, and the second edge region 532 is connected between the tab region 540 and the coating region 520. In this way, when the to-be-cut electrode sheet is cut, an edge of the edge region 530 is a cutting edge, and the porosity of the second conductive layer is less than the porosity of the first conductive layer 560, that is, a density of the second conductive layer is higher than the density of the first conductive layer 560. This can effectively improve the coating fall-off problem at the edge region 530 of the to-be-cut electrode sheet during the cutting process, thereby reducing the risk of internal short circuit of the battery cell 20 caused by overlapping of the positive electrode sheet 502 and the negative electrode sheet 501, and improving the yield of the battery cell 20.

Embodiments of this application further provide a battery cell including an electrode assembly 22, where the electrode assembly includes the electrode sheet 50 according to the foregoing embodiments. Specifically, the battery cell may be the battery cell 20 shown in FIG. 3.

FIG. 12 is a schematic partial cross-sectional view of an electrode assembly 22 according to an embodiment of this application. As shown in FIG. 12, the electrode assembly 22 includes a negative electrode sheet 501, a positive electrode sheet 502, and a separator 503. The separator 503 is disposed between the negative electrode sheet 501 and the positive electrode sheet 502. The positive electrode sheet 502 includes a positive electrode current collector 5021 and an insulating layer 5022 provided on at least part of a surface of the positive electrode current collector 5021.

In some implementations, as shown in FIG. 12, the electrode sheet 50 is a negative electrode sheet 501. The electrode assembly 22 further includes a positive electrode sheet 502. An insulating layer 5022 is provided at a position of a region of the positive electrode sheet 502 corresponding to an edge region 530 of the negative electrode sheet 501.

It should be understood that in the embodiments of this application, the region of the positive electrode sheet 502 where the insulating layer 5022 is provided corresponding to the edge region 530 of the negative electrode sheet 501 may be named a first region. A dimension of the first region in a direction Y may be less than or equal to a dimension of the edge region 530 on the negative electrode sheet 501 in the direction Y.

In the embodiments of this application, the electrode sheet 50 is the negative electrode sheet 501, and the electrode assembly 22 further includes the positive electrode sheet 502. The insulating layer 5022 is provided at the position of the region of the positive electrode sheet 502 corresponding to the edge region 530 of the negative electrode sheet 501, so that when metal ions are precipitated on a surface of the edge region 530 of the negative electrode sheet 501, due to the provision of the insulating layer 5022, the risk of internal short circuit of the battery cell 20 caused by overlapping of the positive electrode sheet 502 and the negative electrode sheet 501 can be effectively reduced, thereby improving the yield of the battery cell 20.

In some implementations, the battery cell 20 is an alkali metal battery cell. Exemplarily, the alkali metal in the alkali metal battery cell includes but is not limited to sodium, potassium, and lithium. In this way, in the embodiments of this application, the battery cell 20 is set to be the alkali metal battery cell, so that the energy density of the battery 10 and the reliability of the service performance can be improved.

Embodiments of this application further provide a battery including the battery cell 20 according to the foregoing embodiments. Specifically, the battery may be the battery 10 shown in FIG. 2.

Embodiments of this application further provide an electric device including the battery 10 according to the foregoing embodiments, where the battery 10 is configured to supply electrical energy to the electric device. Specifically, the electric device may be the vehicle 1 shown in FIG. 1 or any device using the battery 10.

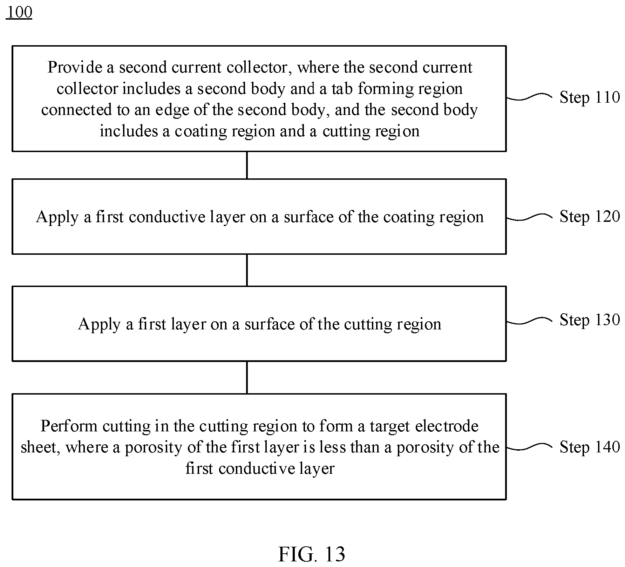

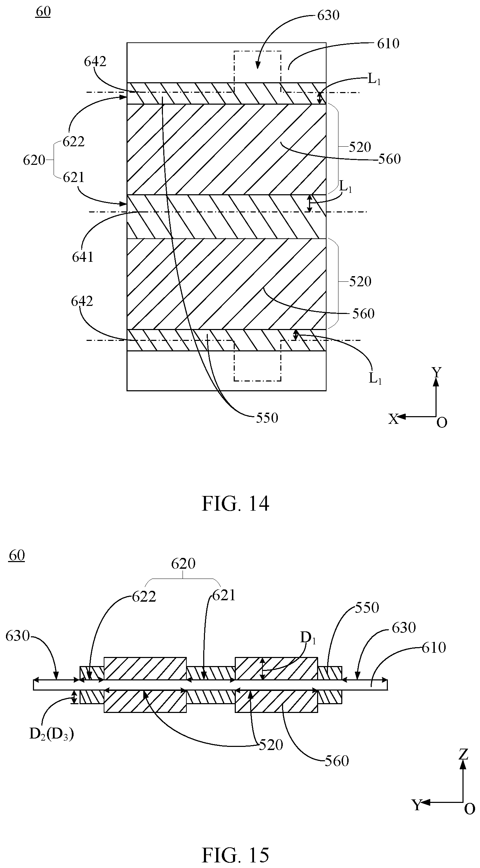

FIG. 13 is a schematic flowchart of a method for preparing a to-be-cut electrode sheet 60 according to an embodiment of this application. FIG. 14 is a schematic cross-sectional view of a to-be-cut electrode sheet 60 according to an embodiment of this application. FIG. 15 is a schematic cross-sectional view of another to-be-cut electrode sheet 60 according to another embodiment of this application. FIGs. 14 and 15 can be understood as schematic cross-sectional views of a same to-be-cut electrode sheet 60 in different directions. Exemplarily, FIG. 14 may be a schematic cross-sectional view of the to-be-cut electrode sheet 60 perpendicular to a thickness direction of the to-be-cut electrode sheet 60. FIG. 15 may be a schematic cross-sectional view of the to-be-cut electrode sheet 60 perpendicular to a length direction of the to-be-cut electrode sheet 60.

In some implementations, as shown in FIGs. 13 to 15, a method for preparing the electrode sheet 50 in the embodiments of this application includes the following steps 110 to 140. Step 110: Provide a second current collector 610, where the second current collector 610 includes a second body and a tab forming region 630 connected to an edge of the second body, and the second body includes a coating region 520 and a cutting region 620. Step 120: Apply a first conductive layer 560 on a surface of the coating region 520. Step 130: Apply a first layer 550 on a surface of the cutting region 620. Step 140: Perform cutting in the cutting region 620 to form the electrode sheet 50 in the foregoing embodiments. A porosity of the first layer 550 is less than a porosity of the first conductive layer 560. It should be understood that in the embodiments of this application, the sequence of step 120 and step 130 in the above method is not limited, that is, step 120 may be performed before step 130, or step 130 may be performed before step 120.

It should also be understood that in the embodiments of this application, the above target electrode sheet includes but is not limited to the electrode sheet 50 shown in FIGs. 4 to 11.

It should also be understood that in some implementations, as shown in FIGs. 14 and 15, performing cutting in the cutting region 620 may mean that in a cutting process of the to-be-cut electrode sheet 60, the cutting region 620 includes a first cutting sub-region 621, the to-be-cut electrode sheet 60 may be cut along a first cutting line 641, and the cutting region 620 is completely cut along a direction X, so that the to-be-cut electrode sheet 60 is divided into two. In some other implementations, performing cutting in the cutting region 620 may alternatively mean that in a die-cutting process of the to-be-cut electrode sheet 60, the cutting region 620 includes a second cutting sub-region 622, and the to-be-cut electrode sheet 60 may be cut along a second cutting line 642 to form a tab portion at an edge of the second current collector 610.

It should also be understood that in the embodiments of this application, a rectangular to-be-cut electrode sheet 60 shown in FIGs. 14 and 15 is only an example, and the shape of the to-be-cut electrode sheet 60 includes but is not limited to square, parallelogram, and polygon.

In the embodiments of this application, the second current collector 610 includes the second body, the first conductive layer 560 is applied on the surface of the coating region 520, and the first layer 550 is applied on the surface of the cutting region 620, so that when cutting is performed in the cutting region 620, since the porosity of the first layer 550 is less than the porosity of the first conductive layer 560, that is, a density of the first layer 550 is higher than a density of the first conductive layer 560, the coating fall-off problem generated during the cutting process of the to-be-cut electrode sheet 60 in the cutting region 620 can be improved by increasing the density of the first layer 550, thereby reducing the risk of internal short circuit of the battery cell 20 caused by overlapping of the positive electrode sheet 502 and the negative electrode sheet 501, and improving the yield of the battery cell 20.

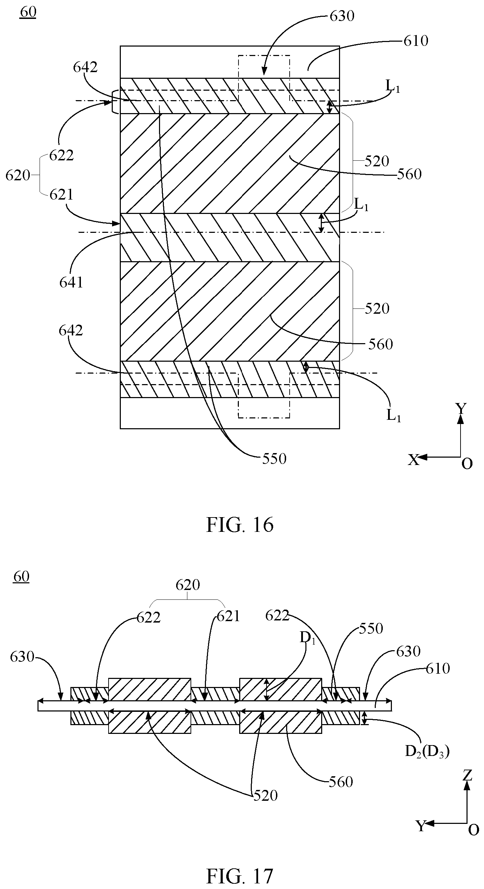

In some implementations, as shown in FIGs. 16 and 17, before the performing cutting in the cutting region 620, the method for preparing the electrode sheet 50 further includes: applying the first layer 550 on a surface of a region of the tab forming region 630 close to the second body. In this way, in the embodiments of this application, the first layer 550 is applied on the surface of the region of the tab forming region 630 close to the second body, so that the tab forming region 630 can be reinforced, thereby reducing deformation and cracking of the to-be-cut electrode sheet 60 during the cutting process and subsequent winding process, thereby improving the service performance of the battery 10.

In some implementations, as shown in FIGs. 16 and 17, before the performing cutting in the cutting region 620, the method for preparing the electrode sheet 50 further includes: applying the first layer 550 on a surface of the first conductive layer 560 away from the second current collector 610. In this way, in the embodiments of this application, the first layer 550 is applied on the surface of the first conductive layer 560 away from the second current collector 610, during the cutting process of the to-be-cut electrode sheet 60, for example, during laser die-cutting, the thermal influence on the first conductive layer 560 close to the cutting region 620 during the laser die-cutting process can be reduced, and the ablation phenomenon at the edge of the cutting position can be reduced, thereby improving the service performance of the battery 10.

In some implementations, as shown in FIGs. 14 to 17, the first layer 550 includes a second conductive layer. In this way, in the embodiments of this application, providing the second conductive layer on the surface of the cutting region 620 can increase a deposition area of metal ions on the target electrode sheet and improve the conductive performance of the electrode sheet 50, thereby increasing the energy density of the battery 10.

In some implementations, as shown in FIGs. 14 to 17, the first layer 550 includes an insulating layer. In this way, in the embodiments of this application, providing the insulating layer on the surface of the cutting region 620 can improve the insulation performance of the electrode sheet 50 in the edge region and effectively reduce the deposition of metal at an edge position of the electrode sheet 50, thereby improving the yield of the battery cell 20.

In some implementations, as shown in FIGs. 14 to 17, the coating region 520 includes at least two coating sub-regions; a first cutting sub-region of the cutting region 620 is provided between two of the coating sub-regions; and the method for preparing the electrode sheet 50 further includes: performing cutting in the first cutting sub-region 621 to form a first edge region on a side of the coating region 520 away from the tab forming region 630.

Exemplarily, as shown in FIGs. 14 and 16, the to-be-cut electrode sheet 60 may be cut into two target electrode sheets along the first cutting line 641 in the first cutting sub-region 621. It should be understood that a direction of the first cutting line 641 may be set according to actual needs. For example, a cutting direction of the first cutting line 641 may be parallel to the direction X, or the cutting direction of the first cutting line 641 may intersect the direction X.

It should be understood that in the embodiments of this application, cutting may be performed in the first cutting sub-region 621 to form the first edge region on the side of the coating region 520 away from the tab forming region 630. The first edge region may be the first edge region 531 of the electrode sheet 50 shown in FIGs. 5, 7, 8, and 9.

In the embodiments of this application, the first cutting sub-region 621 of the cutting region 620 is provided between two of the coating sub-regions, and cutting is performed in the first cutting sub-region 621 to form the first edge region 531 on the side of the coating region 520 away from the tab forming region 630. Since a porosity of the first layer 550 applied on the first cutting sub-region 621 is less than the porosity of the first conductive layer 560, that is, a density of the first layer 550 is higher than a density of the first conductive layer 560, the coating fall-off problem during the cutting process can be reduced, thereby reducing the risk of internal short circuit of the battery cell 20, and improving the yield of the battery cell 20.

In some implementations, as shown in FIGs. 14 and 16, a second cutting sub-region 622 of the cutting region 620 is provided between the tab forming region 630 and the coating region 520; and the method for preparing the electrode sheet 50 further includes: performing cutting in the second cutting sub-region 622 to form a tab region 540 and a second edge region of a target electrode sheet, where the second edge region is connected between the tab region 540 and the coating region 520.

It should be understood that in the embodiments of this application, the tab forming region 630 is used to form a tab of the to-be-cut electrode sheet 60. Exemplarily, in the die-cutting process of the to-be-cut electrode sheet 60, cutting may be performed along the second cutting line 642 to form the tab. It should also be understood that in the embodiments of this application, the number of tabs formed after die-cutting can be set according to actual needs. For example, the number of tabs may be 1, 2, 3, or the like. In addition, in the embodiments of this application, the shape of the tab formed after die-cutting can be set according to actual needs. For example, the shape of the tab may be rectangular, square, and trapezoidal, or the like.

It should also be understood that the second edge region may be the second edge region 532 of the electrode sheet 50 shown in FIGs. 5, 7, 10, and 11.

In the embodiments of this application, when the to-be-cut electrode sheet 60 is subjected to cutting treatment, for example, laser die-cutting treatment, a die-cutting position is located in the second cutting sub-region 622 between the tab forming region 630 and the coating region 520. Since a porosity of the first layer 550 coated in the second cutting sub-region 622 is less than the porosity of the first conductive layer 560, that is, the density of the first layer 550 is higher than the density of the first conductive layer 560, the ablation phenomenon at the die-cutting position in the cutting region 620 during the laser die-cutting process can be reduced by increasing the density of the first layer 550, and the coating fall-off phenomenon during the cutting process can be reduced, thereby reducing the risk of internal short circuit of the battery cell 20, and improving the yield of the battery cell 20.

In some implementations, still referring to FIGs. 10 and 11, an electrode sheet 50 is provided. The electrode sheet 50 includes: a first current collector 510, a first conductive layer 560, and a first layer 550. The first current collector 510 includes a first body and a tab region 540 connected to an edge of the first body. The first body includes a coating region 520 and an edge region 530. The first conductive layer 560 is provided on a surface of the coating region 520. The first layer 550 is provided on a surface of the edge region 530. A porosity of the first layer 550 is less than a porosity of the first conductive layer 560, and the porosity A₁ of the first layer is 25%. A dimension L₁ of the edge region 530 in a first direction is 5 mm. The edge region 530 includes a second edge region 532. The second edge region 532 is connected between the tab region 540 and the coating region 520.

Although this application has been described with reference to the above embodiments, various improvements can be made thereto without departing from the scope of this application, and equivalent replacements can be used for the components therein. In particular, as long as there is no structural conflict, the various technical features mentioned in the embodiments can be combined in any manner. This application is not limited to the specific embodiments disclosed herein, but includes all technical solutions falling within the scope of the claims.

## Claims

1. An electrode sheet, **characterized by** comprising:
a first current collector, wherein the first current collector comprises a first body and a tab region connected to an edge of the first body, and the first body comprises a coating region and an edge region;
a first conductive layer, the first conductive layer being provided on a surface of the coating region; and
a first layer, the first layer being provided on a surface of the edge region;
wherein a porosity of the first layer is less than a porosity of the first conductive layer.

2. The electrode sheet according to claim 1, **characterized in that** the porosity A₁ of the first layer satisfies: 0% < A₁ ≤ 50%.

3. The electrode sheet according to claim 1 or 2, **characterized in that** the porosity A₁ of the first layer satisfies: 20% ≤ A₁ ≤ 30%.

4. The electrode sheet according to any one of claims 1 to 3, **characterized in that** a ratio L₁/D₁ of a dimension L₁ of the edge region in a first direction to a thickness D₁ of the first conductive layer satisfies: 10 ≤ L₁/D₁ ≤ 1000, preferably 20 ≤ L₁/D₁ ≤ 100, wherein the first direction is perpendicular to a thickness direction of the electrode sheet.

5. The electrode sheet according to claim 4, **characterized in that** the dimension L₁ of the edge region in the first direction satisfies: 2 mm ≤ L₁ ≤ 20 mm.

6. The electrode sheet according to claim 4 or 5, **characterized in that** the dimension L₁ of the edge region in the first direction satisfies: 3 mm ≤ L₁ ≤ 6 mm.

7. The electrode sheet according to any one of claims 1 to 6, **characterized in that** the thickness D₁ of the first conductive layer satisfies: 1 µm ≤ D₁ ≤ 50 µm.

8. The electrode sheet according to any one of claims 1 to 7, **characterized in that** a material of the first conductive layer comprises at least one of the following materials: carbon nanotubes, graphene, conductive graphite, and conductive carbon.

9. The electrode sheet according to any one of claims 1 to 8, **characterized in that** the first layer extends to the tab region.

10. The electrode sheet according to any one of claims 1 to 9, **characterized in that** the first layer further extends to a surface of the first conductive layer away from the first current collector.

11. The electrode sheet according to any one of claims 1 to 10, **characterized in that** the first layer comprises a second conductive layer.

12. The electrode sheet according to claim 11, **characterized in that** a material of the second conductive layer comprises at least one of the following materials: carbon nanotubes, graphene, and conductive graphite.

13. The electrode sheet according to claim 12, **characterized in that** a thickness D₂ of the second conductive layer satisfies: 2 µm ≤ D₂ ≤ 150 µm, preferably 70 µm ≤ D₂ ≤ 120 µm.

14. The electrode sheet according to claim 11, **characterized in that** a material of the second conductive layer comprises conductive carbon, and a thickness D₂ of the second conductive layer satisfies: 10 µm ≤ D₂ ≤ 70 µm.

15. The electrode sheet according to any one of claims 1 to 10, **characterized in that** the first layer comprises an insulating layer.

16. The electrode sheet according to claim 15, **characterized in that** a thickness D₃ of the insulating layer satisfies: 5 µm ≤ D₃ ≤ 100 µm, preferably 5 µm ≤ D₃ ≤ 20 µm.

17. The electrode sheet according to claim 15 or 16, **characterized in that** a material of the insulating layer comprises at least one of the following materials: boehmite, polyvinylidene fluoride, ethylene propylene diene monomer rubber, and polyimide.

18. The electrode sheet according to any one of claims 1 to 17, **characterized in that** the edge region comprises a first edge region, and the first edge region is connected to a side of the coating region away from the tab region; and/or
the edge region comprises a second edge region, and the second edge region is connected between the tab region and the coating region.

19. A battery cell, **characterized by** comprising: an electrode assembly, wherein the electrode assembly comprises the electrode sheet according to any one of claims 1 to 18.

20. The battery cell according to claim 19, **characterized in that** the electrode sheet is a negative electrode sheet, the electrode assembly further comprises a positive electrode sheet, and an insulating layer is provided at a position of a region of the positive electrode sheet corresponding to an edge region of the negative electrode sheet.

21. The battery cell according to claim 19 or 20, **characterized in that** the battery cell is an alkali metal battery cell.

22. A battery, **characterized by** comprising the battery cell according to any one of claims 19 to 21.

23. An electric device, **characterized by** comprising the battery according to claim 22, wherein the battery is configured to supply electrical energy to the electric device.

24. A method for preparing an electrode sheet, **characterized by** comprising:
providing a second current collector, wherein the second current collector comprises a second body and a tab forming region connected to an edge of the second body, and the second body comprises a coating region and a cutting region;
applying a first conductive layer on a surface of the coating region;
applying a first layer on a surface of the cutting region; and
performing cutting in the cutting region to form the electrode sheet according to any one of claims 1 to 18;
wherein a porosity of the first layer is less than a porosity of the first conductive layer.

25. The method according to claim 24, **characterized in that** before the performing cutting in the cutting region, the method further comprises:
applying the first layer on a surface of a region of the tab forming region close to the second body.

26. The method according to claim 24 or 25, **characterized in that** before the performing cutting in the cutting region, the method further comprises:
applying the first layer on a surface of the first conductive layer away from the second current collector.

27. The method according to any one of claims 24 to 26, **characterized in that** the first layer comprises a second conductive layer.

28. The method according to any one of claims 24 to 26, **characterized in that** the first layer comprises an insulating layer.

29. The method according to any one of claims 24 to 28, **characterized in that** the coating region comprises at least two coating sub-regions; a first cutting sub-region of the cutting region is provided between two of the coating sub-regions; and the method further comprises: performing cutting in the first cutting sub-region to form a first edge region on a side of the coating region away from the tab forming region.

30. The method according to any one of claims 24 to 29, **characterized in that** a second cutting sub-region of the cutting region is provided between the tab forming region and the coating region; and the method further comprises:
performing cutting in the second cutting sub-region to form a tab region and a second edge region of the electrode sheet, wherein the second edge region is connected between the tab region and the coating region.
